# EUROPÄISCHE PATENTSCHRIFT

(11) **EP 0 905 406 B1**
(45) Veröffentlichungstag und Bekanntmachung des Hinweises auf die Patenterteilung: **09.01.2002**
(21) Anmeldenummer: 98117108.5
(22) Anmeldetag: 10.09.1998
(51) Int. Cl.: F16F 9/05, F16F 9/084

(54) **Luftfederungssystem**
Air spring system
Système à ressort pneumatique

(30) Priorität: 17.09.1997 DE 19740798
(43) Veröffentlichungstag der Anmeldung: 31.03.1999
(73) Patentinhaber: ContiTech Luftfedersysteme GmbH, 30165 Hannover (DE)
(72) Erfinder: Pahl, Hans-Joachim, 30952 Ronnenberg (DE)
(74) Vertreter: Schneider, Egon

(56) Entgegenhaltungen:
- EP-A- 0 403 447
- DE-B- 1 184 225
- GB-A- 1 043 425

## Beschreibung

Bei der Erfindung wird ausgegangen von einem Luftfederungssystem gemäß dem Oberbegriff des Anspruchs 1.

Ein derartiges System ist aus der DE-B-1 184 225 bekannt.

Solch ein Luftfederungssystem besteht aus einer Luftfeder, die im wesentlichen einen Rollbalg und einen Abrollkolben umfaßt, und einem Stoßdämpfer. In diesem Stoßdämpfer wird während des Ein- und Ausfederns Schwingungsenergie in Wärme umgewandelt. Die so erzeugte Wärme gilt es abzuführen.

Wenn der Stoßdämpfer seitlich neben der Luftfeder angeordnet wird, ist zwar normalerweise durch den Fahrtwind eine hinreichende Kühlung gegeben. Es sind aber zwei separate Baueinheiten zu montieren, was eine größere Verweildauer am Fließband erforderlich macht. Darüberhinaus ist insgesamt ein größerer Bauraum erforderlich, wenn Stoßdämpfer und Luftfeder nebeneinander anzubringen sind.

Die britische Patentschrift 1.043.425 beschreibt ein verbessertes Luftfedersystem. Hierbei ist ein Stoßdämpfer etwa zur Hälfte in eine Luftfeder integriert. Der aus der Luftfeder herausragende Teil des Stoßdämpfers wird vom Fahrtwind umstrichen. Gleichzeitig bewirken Ablenk- und Umlenkelemente, daß ein Teil des Fahrtwindes durch einen Zwischenraum zwischen dem oberen Teil des Stoßdämpfers und dem Abrollkolben geführt wird.

Auch hier ist insgesamt ein größerer Bauraum erforderlich. Da die Anordnung dem Fahrtwind ausgesetzt sein muß, läßt sich eine erhöhte Verschmutzung nicht vermeiden.

Der im Anspruch 1 angegebenen Erfindung liegt die Aufgabe zugrunde, den Stoßdämpfer komplett innerhalb einer Luftfeder anzuordnen. Dabei soll eine hinreichende Wärmeabfuhr von dem Stoßdämpfer gewährleistet sein.

Mit dem erfindungsgemäßen Luftfederungssystem wird die von einem handelsüblichen, in die Luftfeder integrierten Ein- oder Zweirohrstoßdämpfer erzeugte Wärme durch Konvektion abgeführt. Erfindungsgemäß wird die Funktion zweier Bauteile (Feder und Dämpfer) in einem einzigen Aggregat räumlich zusammengefaßt. Dadurch, daß der Stoßdämpfer komplett innerhalb der Luftfeder angeordnet ist, steht am Montageband eine einzige einbaufertige Komponente zur Verfügung. Dies verringert die Anzahl der Montageschritte und damit die Verweildauer am. Montageband.

Die gesamte Einbauhöhe ist so gering, daß ein Einbau an der Hinterachse von Nutzfahrzeugen problemlos möglich ist.

Durch die düsenförmige Verengung des Einsatzes ergibt sich beim Ein- und Ausfedern ein Luftstrom entlang der Außenwand des Stoßdämpfers.
Sind die äußeren öffnungen des Einsatzes ebenfalls trichterförmig (aber der inneren trichterförmigen Verengung entgegengesetzt) ausgebildet, so wird beim Ein- und Ausfedern eine erhöhte Luftzirkulation erreicht.

Wählt man für das innere trichterförmige Teilstück des Einsatzes ein flexibles Material aus, so wird auch bei extremen Torkelbewegungen der Luftfeder eine Zerstörung des Einsatzes vermieden.

Die Erfindung wird anhand eines Ausführungsbeispiels näher beschrieben.

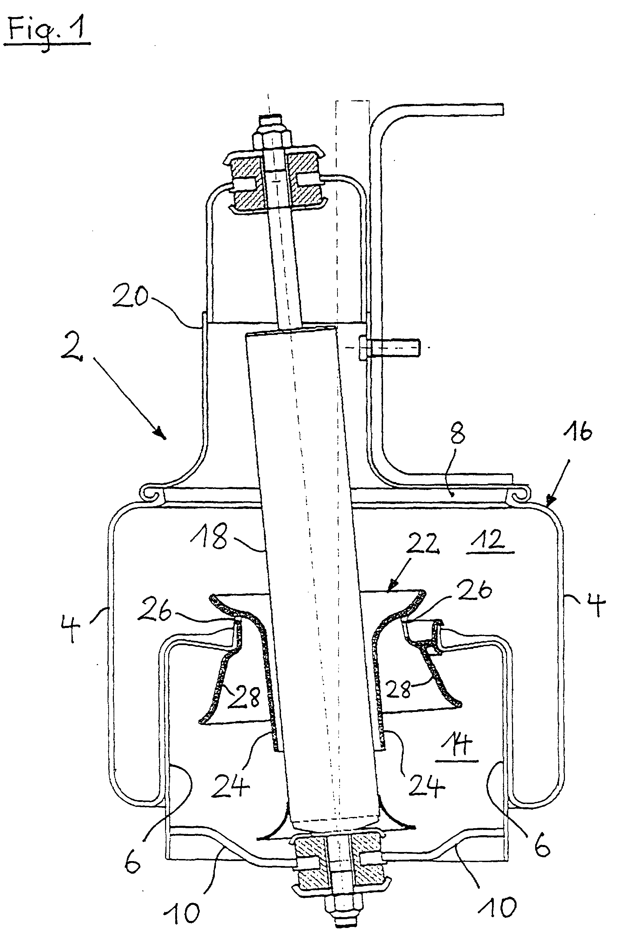

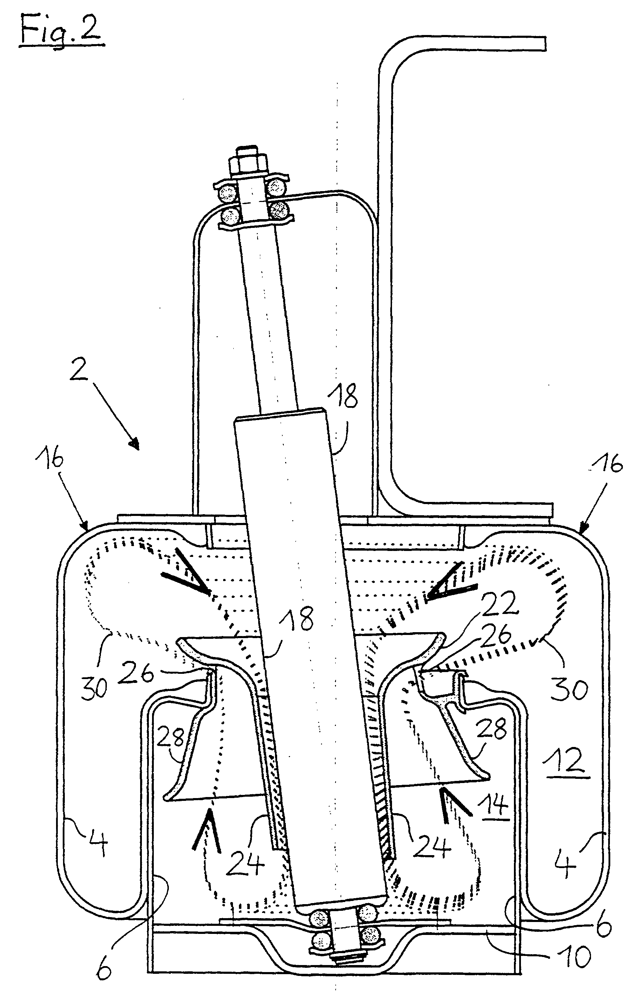

Fig. 1 zeigt einen Längsschnitt durch ein erfindungsgemäßes Luftfederungssystems; anhand der Fig. 2 soll die Wirkungsweise verdeutlicht werden.

Gemäß Fig. 1 besteht das erfindungsgemäße Luftfederungssystem 2 im wesentlichen aus einem Rollbalg 4 und einem zylindrischen Abrollkolben 6. Der Rollbalg 4 ist oben an einer Bördelplatte 8 befestigt. Den unteren Abschluß des Abrollkolbens 6 bildet eine Kolbenstütze 10. Die Innenräume 12, 14 von Rollbalg 4 und Abrollkolben 6 stehen miteinander in Verbindung und bilden zusammen das wirksame Luftfedervolumen (12 + 14). Innerhalb der Luftfeder 16 befindet sich ein handelsüblicher Stoßdämpfer 18, der sich einerseits an einem an der Bördelplatte 8 befindlichen Fortsatz 20 abstützt, andererseits an der Kolbenstütze 10 elastisch befestigt ist. D. h., der Stoßdämpfer 18 erstreckt sich über die gesamte lichte Höhe der Luftfeder 16. Anstelle eines üblichen Spanntellers, an dem sonst der untere Rand des Rollbalgs 4 anvulkanisiert wird, befindet sich zwischen Rollbalg 4 und Abrollkolben 6 ein trichterförmiger Einsatz 22, welcher den Stoßdämpfer 18 in der Weise umgibt, daß sich zwischen den Wandungen des Stoßdämpfers 18 und der Innenfläche des trichterförmigen Einsatzes 22 eine ringförmig-düsenförmige Verengung 24 ergibt. Im äußeren Bereich des trichterförmigen Einsatzes 22 befinden sich öffnungen 26, die ebenso wie die düsenförmige Verengung 24 eine Verbindung zwischen dem Volumen 12 des Rollbalgs 4 und dem Volumen 14 des Abrollkolbens 6 herstellt. Der äußere Rand des Einsatzes 22 stellt eine dichte und feste Verbindung zwischen dem unteren Ende des Rollbalgs 4 und dem oberen Rand des Abrollkobens 6 dar.

In dem in der Abbildung 1 dargestellten Ausführungsbeispiel ist nicht nur der innere Bereich des Einsatzes 22 trichterförmig ausgebildet, sondern auch der äußere Bereich. hat trichterförmige Gestalt. Und zwar ist der äußere Trichter 28 dem inneren Trichter 24 entgegengesetzt ausgerichtet. Vorzugsweise besteht zumindest der innere trichterförmige Bereich 24 aus flexiblem Material.

Die Wirkungsweise des erfindungsgemäß kühlbaren Luftfederungssystems wird anhand der Fig. 2 veranschaulicht.
Beim Einfedern wird der Rollbalg 4 zusammengestaucht, wodurch sich das Volumen 12 des Rollbalgs 4 verkleinert und der Luftdruck entsprechend vergrößert. Um einen Druckausgleich zwischen Rollbalginnenraum 12 und Innenraum 14 des Abrollkolbens 6 zu bewirken, strömt nun Luft aus dem Rollbalg 4 über die Verengung. 24 des trichterförmigen Einsatzes 22 am Stoßdämpfer 18 entlang in den Abrollkolben 6. Wegen der düsenförmigen Verengung 24 ergibt sich hier gemäß der Kontinuitätsgleichung F₁v₁ = F₂v₂ eine erhöhte Geschwindigkeit.
Unterstellt man in grober Näherung ideale Verhältnisse, so ist nach Bernoulli der sich aus statischem Druck und Staudruck zusammensetzende Gesamtdruck p = po + ρv²/2 konstant, was bedeutet, daß am Düsenausgang 24 wegen der großen Geschwindigkeit ein Unterdruck herrscht. Dieser Unterdruck führt - verglichen mit der Strömung durch die sonstigen öffnungen 26 - zu einer erhöhten Strömung durch die düsenförmige Ausgestaltung.

Beim Ausfedern wirkt der entgegengesetzt orientierte äußere Trichter 28 als Strömungsbeschleuniger, so daß insgesamt eine Luftzirkulation 30 in Richtung der eingetragenen Pfeile erzeugt wird. Der durch das Ein- Und Ausfedern erwärmte Stoßdämpfer 18 wird durch diese, an dem Stoßdämpfer 18 vorbeigeführte Luftzirkulation 30 abgekühlt, indem die im Dämpfer 18 in Form von Wärme erzeugt Verlustleistung im Federvolumen 12 + 14 verteilt wird. Die weitere Wärmeabfuhr erfolgt dann über die im Fahrtwindstrom liegende Außenfläche des Luftfederbalges 4 sowie des Kolbens 6.

### Bezugszeichenliste

- 2: Luftfederungssystem
- 4: Rollbalg, Luftfederbalg
- 6: Abrollkolben
- 8: Bördelplatte
- 10: Kolbenstütze
- 12: Rollbalg-Innenraum, Volumen des Rollbalgs
- 14: Abrollkolben-Innenraum, Volumen des Abrollkolbens
- 16: Luftfeder
- 18: Stoßdämpfer
- 20: Fortsatz, Aufsatz
- 22: Einsatz
- 24: Verengung, innerer Trichter
- 26: Öffnungen
- 28: äußerer Trichter
- 30: Luftzirkulation

## Patentansprüche

1. Luftfederungssystem (2) mit einer Rollbalg (4) und Abrollkolben (6) umfassenden Luftfeder (16) und mit einem Stoßdämpfer (18),
wobei das Volumen (12) des Rollbalgs (4) und das Volumen (14) des Abrollkolbens (6) ein gemeinsames Federvolumen (12 + 14) bilden,
**dadurch gekennzeichnet,**
**daß** sich der Stoßdämpfer (18) gänzlich innerhalb der Luftfeder (16) befindet, und
**daß** anstelle eines als oberer Abschluß des Abrollkolbens (6) gegenüber dem Rollbalg (4) angeordneten Spanntellers ein sich düsenförmig verjüngender, trichterförmiger Einsatz (22) angeordnet ist, welcher das Rohr des Stoßdämpfers (18) zumindest teilweise umgibt, und
**daß** am äußeren Rand des Einsatzes (22) öffnungen (26) vorhanden sind,
wobei sowohl über die innere trichterförmige Verengung (24) des Einsatzes (22) als auch über die an dessen Rand angeordneten öffnungen (26) das Volumen (12) des Rollbalgs (4) mit dem Volumen (14) des Abrollkolbens (6) verbunden ist, so daß beim Ein- und Ausfedern eine Luftzirkulation (30) entsteht.

2. Luftfederungssystem nach Anspruch 1,
**dadurch gekennzeichnet,**
**daß** der Einsatz (22) in Richtung auf das Volumen (14) des Abrollkolbens (6) düsenförmig ausgebildet ist.

3. Luftfederungssystem nach Anspruch 1 oder 2,
**dadurch gekennzeichnet,**
**daß** die am äußeren Rand des Einsatzes (22) angeordneten öffnungen (26) als ein äußerer Tricher (28) - und zwar zu dem den Stoßdämpfer (18) umgebenden düsenförmigen inneren Trichter (24) entgegengesetzt - ausgebildet sind, so daß sich beim Ein- und Ausfedern eine verstärkte Luftzirkulation (30) ergibt.

4. Luftfederungssystem nach einem der vorhergehenden Ansprüche,
**dadurch gekennzeichnet,**
**daß** zumindest der den Stoßdämpfer (18) umgebende, innere Trichter (24) des Einsatzes (24) aus flexiblem Material besteht.

## Claims

1. Pneumatic suspension system (2), having an air spring (16), which includes roller bellows (4) and roller piston (6), and a shock absorber (18),
wherein the volume (12) of the roller bellows (4) and the volume (14) of the roller piston (6) form a common spring volume (12 + 14),
**characterised**
**in that** the shock absorber (18) is situated completely within the air spring (16), and
**in that**, instead of a clamping plate disposed opposite the roller bellows (4) as the upper temination of the roller piston (6), a funnel-shaped insert (22) is provided, which tapers in a nozzle-shaped manner and at least partially surrounds the tube of the shock absorber (18), and
**in that** openings (26) are provided in the outer edge of the insert (22),
wherein the volume (12) of the roller bellows (4) is connected to the volume (14) of the roller piston (6) both via the inner funnel-shaped constriction (24) of the insert (22) and via the openings (26), which are disposed at the edge of said insert, so that a circulation of air (30) is produced during the inward and outward oscillation movements.

2. Pneumatic suspension system according to claim 1, **characterised in that** the insert (22) has a nozzle-shaped configuration in the direction towards the volume (14) of the roller piston (6).

3. Pneumatic suspension system according to claim 1 or 2, **characterised in that** the openings (26), which are provided in the outer edge of the insert (22), are configured as an outer funnel (28) - and in fact are opposed to the nozzle-shaped inner funnel (24) which surrounds the shock absorber (18) - so that a concentrated circulation of air (30) is produced during the inward and outward oscillation movements.

4. Pneumatic suspension system according to one of the preceding claims, **characterised in that** at least the inner funnel (24) of the insert (22), which funnel surrounds the shock absorber (18), is formed from flexible material.

## Revendications

1. Système de suspension pneumatique (2) comportant un ressort pneumatique (16) comprenant un soufflet roulant (4) et un piston d'enroulement (6), et un amortisseur de chocs (18), dans lequel le volume (12) du soufflet roulant (4) et le volume (14) du piston d'enroulement (6) forment un volume pneumatique commun (12 + 14),
**caractérisé en ce que** :
• l'amortisseur de chocs (18) est situé complètement à l'intérieur du ressort pneumatique ( 16), et
• à la place d'un plateau de serrage disposé en tant que système supérieur de fermeture du piston d'enroulement (6) par rapport au soufflet roulant (4) il est prévu un insert (22) en forme d'entonnoir qui se rétrécit en forme de tuyère et qui entoure au moins partiellement le tube de l'amortisseur de chocs (18),
• des ouvertures (26) sont prévues dans le bord extérieur de l'insert (22),
• le volume (12) du soufflet roulant (4) étant relié au volume (14) du piston d'enroulement (6) aussi bien par l'intermédiaire du rétrécissement intérieur en forme d'entonnoir (24) de l'insert (22) que par l'intermédiaire des ouvertures (26) disposées sur le bord de l'insert, de sorte qu'une circulation d'air (30) se produit lors de la contraction et du déploiement élastique.

2. Système de suspension pneumatique selon la revendication 1, **caractérisé en ce que** l'insert (22) est agencé en forme de tuyère en direction du volume (14) du piston d'enroulement (6).

3. Système de suspension pneumatique selon la revendication 1 ou 2, **caractérisé en ce que** les ouvertures (26) situées sur le bord extérieur de l'insert (22) sont agencées sous la forme d'un entonnoir extérieur (28) - et ce à l'opposé de l'entonnoir intérieur (24) en forme de tuyère, qui entoure l'amortisseur de chocs (18) - de sorte qu'une circulation renforcée d'air (30) se produit lors de la contraction et du déploiement élastiques.

4. Système de suspension pneumatique selon l'une des revendications précédentes, **caractérisé en ce qu'**au moins l'entonnoir intérieur (24), qui entoure l'amortisseur de chocs (18), de l'insert (22) est réalisé en un matériau flexible.
